# EUROPEAN PATENT SPECIFICATION

(11) **EP 2 687 143 B1**
(45) Date of publication and mention of the grant of the patent: **25.05.2016**
(21) Application number: 13176392.2
(22) Date of filing: 12.07.2013
(51) Int. Cl.: A47L 15/42, D06F 39/00, F28F 21/06

(54) **Washing and/or drying machine for domestic use**
Wasch- und/oder Trockenmaschine zur Verwendung im Haushalt
Machine à laver et/ou sécher le linge à usage domestique

(30) Priority: 20.07.2012 IT TO20120641
(43) Date of publication of application: 22.01.2014
(73) Proprietor: Indesit Company S.p.A., 60044 Fabriano (AN) (IT)
(72) Inventor: Bongini, Dino, 60065 Castel Rigone (PG) (IT); Bossi, Luca, 61040 Serra Sant'Abbondio (PU) (IT)
(74) Representative: Santonicola, Paolo

(56) References cited:
- EP-A2- 0 035 617
- WO-A2-2012/062250
- WO-A2-2012/062251

## Description

### Field of the invention

The present invention relates to household washing and/or drying machines, such as dish washers, laundry-washers, laundry washers-dryers, laundry dryers.

### Prior art

Certain household machines of the type referred to above are provided with a heat exchanger. In some solutions, typically used on washing machines such as dish washers, the heat exchanger basically consists of a hollow body set up against a wall of the washtub. In some cases, the hollow body is used for storing water and is provided with a view to obtaining, in the context of at least one hot step of a treatment cycle, a partial heating of water to be used in a subsequent step of the same cycle, exploiting the heat exchange that is obtained between the wall of the washtub and the container set up against it. In the solutions of the type referred to, the surface of heat exchange that is obtained between a larger wall of the water-storage container and the corresponding wall of the washtub is relatively limited. Also the capacity for containing liquid by the container is generally reduced, given the tiny space available between the washtub and the outer cabinet of the machine.

Heat exchangers are used also on some machines designed for drying laundry, and usually comprise at least one coiled metal duct, in which a coolant circulates and is lapped by the drying air in order to favour condensation of the corresponding humidity. Heat exchangers of this sort generally present a considerable cost and are subject, in particular over the long term, to phenomena of deterioration of the metal material constituting the coiled duct.

EP 0 035 617 A2 discloses a laundry-washing machine according to the preamble of claim 1.

### Object and summary of the invention

In view of what has been set forth above, the object of the present invention is to provide a household washing and/or drying machine provided with a heat exchanger which is simple and inexpensive to produce, as well as presenting reliable and efficient operation. An auxiliary object of the present invention is to provide a heat-exchange structure that can be used to advantage on various types of household washing and/or drying machines.

The above objects are achieved, according to the present invention, by a machine having the characteristics specified in Claim 1. Preferred characteristics of the invention are specified in the dependent claims. The claims form an integral part of the technical teaching provided herein in relation to the invention.

### Brief description of the drawings

Further purposes, characteristics and advantages of the present invention will emerge clearly from the ensuing description, with reference to the annexed drawings, which are provided purely by way of non-limiting example and in which:
- Figure 1 is a schematic perspective view of some components of the load-bearing structure of a dish washer according to the invention;
- Figure 2 is a simplified diagram of a possible water circuit of a machine according to the invention;
- Figure 3 is a schematic top plan view of a possible arrangement of components within a base of a machine according to the invention;
- Figure 4 is a schematic perspective view of a possible embodiment of a heat exchanger of a machine according to the invention;
- Figure 5 is a schematic cross-sectional view, according to a vertical plane, of the heat exchanger of Figure 4;
- Figures 6 and 7 are perspective views of two different hollow composable elements forming part of the heat exchanger of Figure 4;
- Figure 8 is a side elevation of the composable element of Figure 6;
- Figure 9 is a schematic top plan view of the heat exchanger of Figure 4, with a top part removed;
- Figure 10 is a partial, schematic, cross-sectional view, according to a horizontal plane, of the heat exchanger of Figure 4; and
- Figure 11 is a schematic cross-sectional view in side elevation of the heat exchanger of Figure 4.

### Description of preferred embodiments of the invention

Reference to "an embodiment" or "one embodiment" within the framework of the present description is intended to indicate that a particular configuration, structure, or characteristic described in relation to the embodiment is comprised in at least one embodiment. Hence, phrases such as "in an embodiment" or "in one embodiment" and the like that may be present in various points of the present description do not necessarily all refer to one and the same embodiment. Moreover, the particular configurations, structures, or characteristics may be combined in any adequate way in one or more embodiments. The references used in what follows are merely provided for convenience and do not define the sphere of protection or the scope of the embodiments.

Is it is moreover pointed out that in the sequel of the present description only the elements useful for an understanding of the invention will be described, taking for granted that the machine according to the invention comprises all the elements in themselves known for its operation (whether it is a dish washer, a laundry washer, a laundry washer-dryer, or a laundry dryer), including a possible external cabinet thereof, a user interface, a control system, level-sensor means, a resistance for heating the water, a dispenser of washing agents, etc.

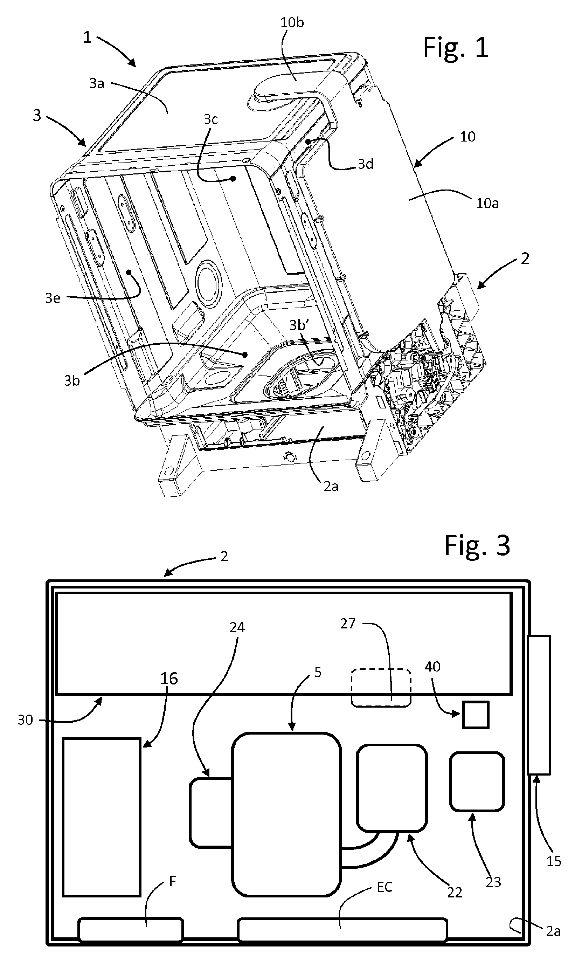

Represented schematically in Figure 1 is a washing and/or drying machine for household use according to a possible embodiment of the present invention. The machine 1, which in the case exemplified is a dish washer, is illustrated limitedly to the parts of immediate interest for an understanding of the present invention.

The machine 1 has a structure that preferably comprises a base 2 and a washtub 3 supported by the base 2. The base 2, made for example of injection-moulded thermoplastic material, has side walls that are preferably open and defines a housing space 2a, positioned within which are various functional components of the machine 1, amongst which a washing pump, a discharge pump, part of a water-collection sump, a water-softening device (if envisaged), the aforesaid elements not being represented in the figures for requirements of greater clarity of the drawing. The washtub 3, of a conception as a whole known, comprises an upper wall 3a, a bottom wall 3b, and four side walls. Visible in the figures are only the stationary side walls of the washtub 3, i.e., the rear wall 3c, and the right-hand and left-hand walls, designated by 3d and 3e, respectively; the fourth side wall of the washtub 3, i.e., its front wall, is constituted by a internal shell of the door of the machine (here not represented), the so-called "counter-door".

It should be noted that the term "base" is meant to designate any structure designed to keep at least the bottom wall 3b of the washtub raised off the floor, thus determining the presence of a housing space 2a: in this perspective, hence, the base 2 could include simply a plurality of legs or upright elements that support the washtub 3 from beneath.

The machine 1 preferably has dimensions typical of machines for household use currently on the market, and hence a width and depth comprised between 55 and 60 cm and a height comprised between 80 and 85 cm.

From Figure 1 it may be seen how the bottom wall 3b of the washtub defines a central opening 3b', at which there is mounted the already cited collection sump, integrating a water-filtering system. Said filtering system may, for example, be of the type generally known from the document No. FR-A-2503557.

In the case exemplified, the machine 1 is provided with a drying circuit, of a substantially closed type, and includes a hollow body, designated as a whole by 10, with a vertical portion 10a that is generally set parallel to the side wall 3d of the washtub and an upper horizontal portion 10b generally set parallel to the upper wall 3a of the washtub. The portion 10b defines an air inlet, which is coupled, for example with interposition of a fan, to an opening of the upper wall 3a, whereas the portion 10a is in fluid communication with the inside of the washtub 3 via a container described hereinafter. The drying circuit preferably includes at least one fan, as in the case represented (reference 50), operative for forced intake of humid air into the washtub 3, via the aforesaid opening present in the upper wall 3a. The configuration as illustrated of the hollow body 10, albeit preferred, serves purely as an example, it being possible to envisage a shape different from the one represented (for example, a configuration including just the portion 10a, provided, in an upper area thereof, with an inlet in communication with the inside of the washtub 3).

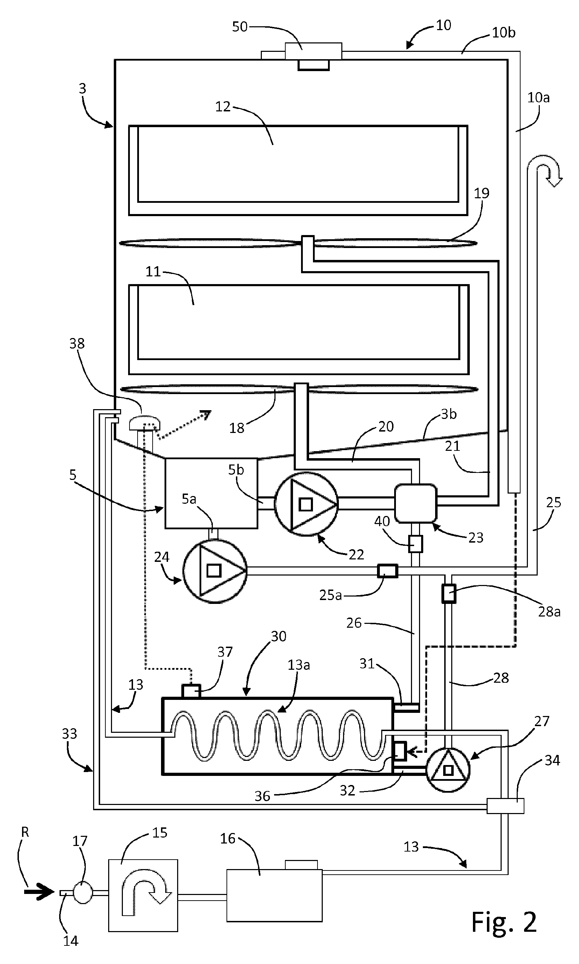

Figure 2 represents a simplified diagram of the water circuit of the machine 1, limitedly to the components useful for an understanding of the invention. In the case exemplified, provided inside the washtub 3 are at least one lower rack 11 and one upper rack 12, which are to contain respective loads of dishes. The racks 11 and 12 are mounted - in a way in itself known - so that they can be pulled out and/or removed through a front opening of the washtub 3. The invention can in any case also be applied to machines provided with a single rack, or also to machines provided with more than two racks. The structure of the machine includes a front door (not represented), the inside of which provides a wall for closing the front opening of the washtub 3.

The machine 1 has charging means, for charging the washtub 3 with water from a domestic mains supply R. In the non-limiting example illustrated, these means include a first duct 13 for supply of the washtub 3 with water, the inlet of which is connected to a connector 14 for connection to the water mains supply R. Provided along the first duct 13 are an air-break device and a water-softening device, which are of a conception known and are designated, respectively, by 15 and 16. Provided on the duct 13, between the connection 14 and the air-break device 15, are valve means 17, such as a solenoid valve, governed by a control system of the machine (not represented). A solenoid valve of this sort is not necessarily installed inside the machine 1, it possibly belonging to a known anti-flooding safety device (generically known as "aquastop") to be installed upstream of the connection 14.

The charging means are configured for charging the washtub 3 with a substantially predetermined amount of water, this amount possibly varying according to the type of treatment program and/or according to the operating step of a treatment program. For the above purpose, the charging means preferably include dosing means of a type in itself known (not represented), such as a level sensor, a two-level pressure switch, or else an impeller volume meter. The functions of the dosing means may also be performed, according to a technique in itself known, via analysis of electrical quantities linked to operation of a washing pump.

The machine 1 has a sprinkling system, which includes at least one first sprinkler member 18 for sprinkling water on the dishes contained in a corresponding rack, here the rack 11. In the case represented, since the machine has two racks, the sprinkling system also includes a second sprinkler member 19 for sprinkling the dishes contained in the rack 12 with water. The invention may in any case also be applied to machines provided with a single sprinkler member, or also to machines provided with more than two sprinkler members. Preferentially, the sprinkler members 18 and 19 are rotary sprinklers, of a conception in itself known. In the example represented, the water circuit of the machine includes two ducts, designated by 20 and 21, for supplying the sprinkler 18 and the sprinkler 19, respectively.

Designated by 22 is a washing or recirculation pump, i.e., a pump driven by an electric motor, for example a centrifugal pump, having an intake section, which is in fluid communication with the outlet 5b of the sump 5 (Figure 2) and a delivery section, which is in fluid communication with the inlets of the ducts 20 and 21. In the embodiment of Figure 2, operatively set between the delivery section of the pump 22 and the inlets of the ducts 20 and 21 are valve means 23. The valve means 23, which are governed by the control system of the machine 1, are switchable at least between a first condition, where the delivery section of the pump 22 is in fluid communication with the sprinklers 18 and 19, via the corresponding ducts 20 and 21, and a second condition, where the delivery section of the pump 22 is in fluid communication with just one of the sprinklers, for example the sprinkler 18, via the duct 20.

The valve means 23 may comprise two solenoid valves, each at the inlet of the respective duct 20 and 21, or else operative along the respective duct 20 and 21. In a preferred embodiment, the valve means 23 are constituted by a device for alternating supply of the sprinklers. Devices of this type are generally known (see, for example, DE-A-3904359 or DE-A-10000772) and normally provided on some dish washers in order to enable execution of treatment programs on the contents of just one of a pair of racks, for example in the case of a reduced load of dishes, or else for execution of treatment programs with alternating supply of a pair of sprinkler members, once again according to a technique in itself known.

In what follows, and where not otherwise specified, it will be assumed that the means 23 are constituted by an aforesaid device for alternating supply, having an open/close element or internal distributor which can assume at least a first position, for opening both of the ducts 20 and 21, and a second position, for opening the duct 20 and closing the duct 21; the distributor member may possibly also be designed to assume a third position, for opening the duct 21 and closing the duct 20.

Once again visible in Figure 2 is the sump 5, which has an outlet 5b in fluid communication with the intake section of the pump 22. As has been said, the sump 5 is of a conception generally known, as is the corresponding filtering system. The lower outlet 5a of the sump 5 is connected to the intake branch of a discharge pump 24, the delivery branch of which is connected to a discharge duct 25.

In the practical embodiment of the machine 1, the sump 5 projects into the base 2 or into the housing space 2a, where there are moreover positioned the pumps 22, 24, the valve means 23, and the water-softening device 16 (if envisaged). The air-break device 15 may instead be set up against, as is customary, one of the side walls of the washtub 3.

The machine 1 further comprises heating means, for heating the water charged into the washtub. Also these means may be of any known type. The heating means preferentially include at least one electrical resistance, electrical supply of which is governed by the control system of the machine 1. The resistance may, for example, be integrated in the pump 22, for instance in an area corresponding to its delivery section; in addition or as an alternative, an electrical resistance may be housed in the sump 5, or else mounted adjacent to the bottom of the washtub 3b or in the intake branch to the pump 22, in a position such as to be immersed in the water in the course or at the end of a step of charging of the washtub with water, once again according to a technique in itself known.

The heating system may moreover include sensor means for detecting the temperature of the water, in signal communication with the control system of the machine, of any type known in the sector. Heating of the water may also be programmed for a given time, i.e., with the resistance that is activated for a pre-set time (in this case, the temperature-sensing means could possibly be omitted, if not required for normative and/or safety reasons).

The control system of the machine (not represented) is preferably of a type that uses an electronic microprocessor, which comprises, or operatively associated to which are, memory means. As known in the art, the control system is configured for supervising overall operation of the machine 1, and hence execution of the treatment program or programs that the machine can handle. Preferably, contained in the memory means of the control system are the data necessary for execution of a plurality of possible treatment programs, and the system includes control means, such as a control panel or user interface, provided with means for selecting a program from among the ones available and starting execution thereof. In the embodiment here exemplified, said programs comprise at least one first treatment program that includes:
- a first operating step with use of heated water, such as a washing step;
- a second operating step with use of water preferably, but not necessarily, heated, such as a first rinsing step; and
- a third operating step with use of heated water, such as a second rinsing step.

According to the invention, the machine 1 is provided with a heat exchanger prevalently made of plastic material, preferably a thermoplastic material suitable for moulding. This heat exchanger comprises a longitudinally extended casing, having a respective hollow body made of plastic material with a first inlet and a first outlet for a first heat-exchange fluid, there extending within the casing a generally tortuous duct for a second heat-exchange fluid, the duct having a respective body made of plastic material. A structure of the type referred to enables increase of the efficiency of the heat exchanger as compared to the known solutions currently used, for example, on common dish washers, and has, at the same time, proven suitable for use also on other washing and/or drying machines. The fact of being made of plastic material, with adequate sizing of shapes and thicknesses, enables containment of the costs of the heat exchanger, likewise facilitating production thereof, in particular in view of the fact that its parts can be obtained by adopting widely used moulding techniques. The production of the heat exchanger is further simplified thanks to the fact that the body of the tortuous duct has a modular structure as defined in claim 1. The use of plastic material moreover reduces the risks of deterioration of the heat exchanger over the long term.

With reference to the example represented in Figure 2, housed in the space 2a is the aforesaid casing, configured as water-storage container, designated as a whole by 30, having an inlet 31 and an outlet 32. At least one portion of the first supply duct 13 - designated by 13a in Figure 2 and defined hereinafter as "heat-exchange portion" - extends within the water-storage container 30, to form the aforesaid heat exchanger therewith.

The machine 1 further comprises first controllable means, for supplying the container 30 with a first heat-exchange fluid, here represented by water used in the aforesaid first operating step, and second controllable means, for emptying from the container 30 the water contained therein. In the example of Figure 2, the aforesaid first controllable means include the washing pump 22 and the valve means 23, in combination with a duct 26 that extends between the valve means 23 and the inlet 31 of the container 30. Once again with reference to the example illustrated, the second controllable means include an additional discharge pump, designated by 27, the intake branch of which is connected to the outlet 32 of the container 30 and the delivery of which is, instead, connected to a duct 28, which can be connected to the discharge duct 25 (as illustrated) or be in parallel therewith. In the example, the duct 28 is connected to the duct 25 and provided thereon is a non-return valve 28a; a similar non-return valve 25a is also provided on the duct 25 in its stretch upstream of the connection with the duct 28. It should be noted that the non-return functions of the valves 25a and 28a can be fulfilled or integrated in the pumps 24 and 27, according to a technique in itself known in the sector.

Once again with reference to the non-limiting example illustrated, the machine 1 includes a second duct, for supply of water to the washtub 3 from the water mains supply R. In the embodiment of Figure 2, the aforesaid second supply duct, designated by 33, is in parallel with the heat-exchange portion 13a of the first supply duct 13. In a different embodiment, the second supply duct 33 may be substantially parallel to the entire first supply duct 13.

Operatively associated to the second supply duct 33 are respective valve means, designated by 34. In the example of Figure 2, said valve means 34 are located substantially at a point where the second duct 33 branches off from the first duct 13 and may include a device comprising two solenoid valves or a deviator device, which can be controlled in such a way that the flow of water coming from the mains supply R, after passing beyond the devices 15 and 16, is oriented alternatively towards the heat-exchange portion 13a of the first duct 13 or else towards the second duct 33.

Once again according to the example of embodiment described, the control system of the machine 1 is configured for:
- controlling the aforesaid first means - here represented by the washing pump 22 and by the valve means 23 in combination with the duct 26 - for discharging into the water-storage container 30 hot water that has been used in the aforesaid first operating step;
- controlling the valve means 34 associated to the second supply duct 33 for feeding into the washtub 3 water taken directly from the water mains supply R in order to perform the second operating step: in this way, at least in the course of execution of the second operating step, the hot water that has been previously discharged into the water-storage container 30 yields heat to the water that is contained in the heat-exchange portion 13a of the first supply duct 13;
- controlling the discharge pump 24 in order to empty from the machine the water used in the second operating step (whether it is heated water or non-heated water), at the end of the latter;
- governing the valve means 17 associated to the first supply duct 13 for enabling transfer into the washtub 3 of the water contained in the heat-exchange portion 13a of the first supply duct 13, and
- governing the second means - represented by the additional pump 27 in combination with the corresponding duct 28 - in order to empty out the water contained in the water-storage container 30 towards the discharge 25.

Thanks to the heat exchanger 13a, 30 the machine 1 is hence able to recover part of the heat of the water used in the first operating step, for the benefit of the water to be used in the course of the third operating step. In effect, at the end of the first operating step, the hot water previously used in the washtub is delivered to the container 30, which is traversed by the heat-exchange portion 13a of the first duct 13, which contains softened water coming from the mains supply R, at the mains temperature. The control system then governs opening of the valve means 17 and 34 so as to get water coming from the mains supply R, which is substantially at the mains temperature to flow directly into the washtub, via the second supply duct 33, for carrying out the second operating step.

In this way, the first heat-exchange fluid, represented by the hot water present in the container 30, yields heat to the second heat-exchange fluid, represented by the water present in the portion 13a of the first duct 13, in substantially static conditions of heat exchange. The adequate time for heat exchange is enabled by the fact that the machine 1, in the meantime, executes the second operating step, using the water charged into the washtub at the mains temperature. Indicatively, if the second step is represented by a rinsing step, its duration may be comprised between 10 and 15 minutes. In the course of the time in which heat exchange occurs between the water contained in the container 30 and the water contained in the portion 13a of the duct 13, the machine 1 here executes an operating step of wetting of the dishes: this proves advantageous in so far as it avoids the risk of any possible residue of washing detergent drying on the dishes themselves.

After the second operating step, for example after the step of discharge from the washtub 3 of the corresponding non-heated water, there is preferentially carried out a step of discharge of the water present in the container 30, via activation of the additional pump 27 by the control system. The valve means 17 associated to the first supply duct 13 are then opened, whereas the valve means 34 are in the non-operative condition; i.e., they obstruct the second duct 33. In this way, the water present in the heat-exchange portion 13a of the first duct 13, now partially heated, is forced into the washtub 3 by the pressure of the water mains supply R itself: the new water at inlet from the mains supply R hence replaces the heated water that is delivered into the washtub. This heated water that has reached the washtub 3 can then undergo a step of further heating up to a pre-set temperature, via the traditional heating means of the machine, in order to perform the third operating step.

It will be appreciated that in this way it is possible to obtain energy saving, in particular reducing the duration of electrical supply necessary for the heating means to bring the water charged into the washtub to the aforesaid pre-set temperature, and reducing as a whole the programming time. A resulting advantage is that the part of water coming from the mains supply R remains in the supply ducts 13 and 33 up to execution of a subsequent washing cycle performed by the machine 1, thereby undergoing a certain increase in temperature (for example, from approximately 15°C of the mains supply R to approximately 20°C of room temperature), which also has positive effects on the reduction of the energy-consumption levels.

As has been seen previously, in a preferred embodiment, associated to the collection sump 5 is the filtering system including the filters 6-8 having meshes of different size. It will thus be appreciated that the means represented by the pump 22, by the valve means 23, and by the duct 26 enable supply of the container 30 with water filtered by at least two of the aforesaid filters. The hot water that is delivered to the container 30, albeit water already used for one treatment of the dishes, is thus water filtered substantially in a fine way, and hence tending to be without any significant residue of dirt. In this way, the risk of clogging of the water-storage container 30 and of the ducts associated thereto is drastically reduced.

As mentioned, the means for supplying the container 30 preferentially comprise a device 23 for alternating supply of at least two sprinkler members 18 and 19 of the sprinkling system of the machine. In a preferred embodiment, the aforesaid device 23 includes an outlet, which, via the duct 26, is connected to the inlet 31 of the container 30, as well as a controllable open/close member, which can assume a plurality of alternative positions, in at least one of which the aforesaid outlet is open. In this way, control of supply of the water-storage container 30 may be made exploiting prevalently means that must in any case be envisaged on board the machine, and especially in its base 2 or space 2a, to the advantage the reduction of the number of components and the overall dimensions. According to one embodiment, the device 23 is configured in such a way that the casing 23a in addition defines a further outlet, connected to which is the inlet of the supply duct 26 of the water-storage container 30.

In one embodiment, control of opening and closing of said further outlet is obtained by way of the aforesaid open/close member or internal distributor of the device 23. In this way, when the water is to be oriented towards the container 30, the further outlet is opened (the other outlets may be indifferently open or closed), in such a way that - given the active condition of the washing pump 22 - the volume of water contained in the washtub is progressively transferred into the container 30.

In a different embodiment, as exemplified in Figure 2, the further outlet of the device 23 is always in fluid communication with the inlet of the device itself, irrespective of the operating position of the aforesaid distributor member. In this case, connected to the further outlet is the first end of the duct 26, the second end of which is connected to the inlet 31 of the container 30, with interposition of further valve means 40 of any known conception. In this embodiment, when the heated water present in the washtub, used in the first operating step, is to be delivered to the container 30, the control system governs opening of the valve 40, with the washing pump 22 active. In this way, and irrespective of the operating position of the internal distributor member of the device 23, the water is progressively delivered into the duct 26, and hence into the container 30.

With reference to its use on a dish-washing machine, the useful capacity of the heat-exchange portion 13a of the supply duct 13 may be substantially equal to or less than the useful capacity of the water-storage container 30. In general terms, the overall useful capacity of the heat exchanger represented by the container 30 and by the heat-exchange portion 13a may be substantially equal to the volume of water necessary for execution of two steps of the washing cycle (preferably from 5 to 6.71). In one embodiment, the container 30 has a useful capacity substantially equal to or slightly greater than the volume of water that is used in the course of the first operating step. In a preferred embodiment, the above useful capacity is comprised between 2.7 and 3.7 1, preferably between 2.9 and 3.5 1, very preferably between 3 and 3.3 1, whereas the portion 13a of the first duct 13 has a useful capacity comprised between 2.2 and 3.4 1, preferably between 2.4 and 3.2 1, very preferably between 2.3 and 3 1. The useful capacity of the container 30 may even be less than the volume of water used in the course of the first operating step. For such a case, after the step of filling of the container 30, the control system will activate the discharge pump 24 for emptying any possible residual water from the washtub 3 and/or from the sump 5.

Hence, in general terms, within the heat exchanger constituted by the water-storage container 30 and by the heat-exchange portion 13a of the duct 13, the amount of hot water may be greater than that of the water at the temperature of the water mains supply R, and this favours the effectiveness of the heat exchange and the energy gain. Of course, this means that, in such an embodiment, the third operating step of the first treatment program will be carried out with an amount of water less than the one used for execution of the first operating step. This is not on the other hand a source of particular problems, considering, for example, that already at present the step of washing in the strict sense of a load of dishes is frequently carried out with an amount of water greater than that used for carrying out a subsequent hot-rinsing step of the same treatment program, driving the washing pump at a lower speed in the course of the rinsing operation. In a possible embodiment of the invention, for example, the third operating step is executed for approximately half of its duration by operating the pump 22 at a reduced speed and/or using just one of the sprinklers 18 and 19.

In one embodiment, the casing of the heat exchanger represented by the water-storage container 30 extends into a generally rear area of the base 2 or of the housing space 2a, preferably set crosswise with respect to the side walls of the base or of the structure of the machine, and at least behind the collection sump 5, the washing pump 22, the discharge pump 24, and the water-softening device 16 (if the latter is provided on board the machine). This arrangement enables exploitation to the full of the space available within the base and maximization of the dimensions of the water-storage container. Such an arrangement is exemplified schematically in Figure 3, where there are moreover visible the device 23 for alternating supply of the sprinklers, the valve 40, and the pump 27. In the figure, designated by F is an anti-disturbance filter, provided for reasons of electromagnetic compatibility, and designated by EC is an electronic card that implements part of the control system of the machine. Moreover visible in the figure is the air-break device 15, which, as per the prior art, may be associated to a side wall of the washtub 3.

It will be appreciated that, in this way, in the rear part of the base 2, or in any case of the structure of the machine, there is always present a volume of water, which is at least equal to that contained in the portion 13a of the supply duct 13, this volume of water possibly contributing to counterbalancing the machine 1. In this regard, it should be recalled that current household dish washers have, for various reasons, a relatively light load-bearing structure so that there exists the risk - in particular in the case of freestanding machines - of the machine tending to tip over forwards when its door is opened and the corresponding racks with the load of dishes are taken out of the washtub: for this reason, it frequently becomes necessary to equip the machine with purposely designed counterweights. The proposed solution enables elimination of such counterweights or at least reduction of the volume and weight thereof.

With reference to the above aspect, and when the water-storage container 30 is not used as active part of a drying system of the machine, the control system can be configured for governing the aforesaid second means (especially the additional pump 27) in order to empty out the water contained in the container 30 only after start of a treatment program that follows in time the treatment program in the course of which water has been delivered to the container itself. Thanks to this characteristic, the volume of water that functions as counterweight can be increased, with all the advantages that this entails.

As has been mentioned previously, in a particularly advantageous embodiment of the invention, the machine 1 comprises a drying circuit, preferably of a substantially closed type, and the heat exchanger formed by the water-storage container 30 and by the portion of duct 13a is used as active part of the drying system.

In this embodiment, and as represented schematically in Figure 2, the container 30 has at least one first inlet 36 for a third heat-exchange fluid, preferably in a region higher up than the minimum level that can be reached by the water in the container itself, and at least one outlet for a third heat-exchange fluid 37, preferably in an upper region thereof and in fluid communication with the inside of the washtub 3. In this embodiment, the third heat-exchange fluid is constituted by the drying air.

In the example illustrated, the drying circuit hence includes the hollow body 10, operatively associated to which is a fan, designated as a whole by 50. In the example, the fan 50 is associated to the hollow body 10, with its intake branch that is in fluid communication with an opening present in the upper wall of the washtub and with its delivery branch, which is instead connected to the inlet of the hollow body 10. The outlet of the hollow body 10 is instead in fluid communication with the air inlet 36 of the water-storage container 30, the air outlet 37 of which communicates with the inside of the washtub 3. In this embodiment, the inlet for the drying air into the washtub may, for example, be defined at the bottom wall 3b of the washtub. This inlet preferably includes a passage of the wall 3b, and a tubular chimney 38, of a conception in itself known, which extends through said passage. In general, the aforesaid chimney 38 has an upper end and a lower end that open on opposite sides of the wall 3b, the upper end being located higher up than the maximum level that can be reached by the water in the course of the washing or rinsing operations executed by the machine 1. Associated to the upper end of the chimney 38 is a cap or lid, which defines a substantially shielded or labyrinthine path, whilst its lower end is connected in fluid communication to the air outlet 37 of the container 30.

In this embodiment, the first treatment program provided by the machine according to the invention includes a dish-drying step, which is executed after emptying-out of the water from the water-storage container 30.

In the drying step, the fan 50, governed by the control system, draws in the humid air present in the washtub 3 and forces it into the hollow body 10, in a downward direction. Advantageously, the hollow body 10 may be configured to perform functions of condensation, for example there being provided within it a tortuous path for the air. At outlet from the hollow body 10, the air penetrates into the water-storage container 30, through its inlet 36, and then returns into the washtub, via the outlet 37 and the chimney 38: in this way, the flow of air, which is still relatively hot, that passes into the container 30, laps the heat-exchange portion 13a of the duct 13. In this step, the portion 13a contains water that is substantially at the temperature of the water mains supply R, and this favours condensation of the humidity still present in the air that has been extracted from the washtub by means of the fan 50. Condensation of this humidity determines formation of drops of water, which are collected in the container 30.

In a particularly advantageous embodiment, it is envisaged that, prior to start of the drying step or in the course of this step, the control system governs the valve means 17 associated to the first supply duct 13 to cause brief opening thereof. Thanks to these brief pulses of opening of the solenoid valve 17, modest amounts of water at the temperature of the mains supply R reach the initial section of the heat-exchange portion 13a of the duct 13 in order to increase the effectiveness of condensation of the humidity present in the circulating air. With this methodology of operation there is obtained a passage of water into the washtub in the course of drying, but the corresponding volume is very modest, in the region of 200-400 cc, and in any case not more than one litre. On the other hand, the presence of this volume of water delivered into the washtub is advantageous in so far as it enables provision of a sort of "water plug" at the sump 5, which prevents any dispersion of the flow of air in said area.

In a preferred embodiment, the portion 13a of the first supply duct 13 has a substantially tortuous development. This enables an increase of the capacity of the portion 13a and a considerable increase of the surface of heat exchange between the heated water delivered to the container 30 and the water present in the portion itself.

Once again preferentially, the portion 13a of the supply duct 13 is made up of a plurality of hollow modular elements, coupled together in fluid communication and each having an inlet and an outlet. In this way, the portion 13a of the first duct 13 can be obtained by assembling together a plurality of components, connecting them in series by means of connection of the outlet of one such element to the inlet of the next element of the series, and with the corresponding larger faces of the various hollow elements preferably set at a distance apart from one another. In this way, it is possible to bestow on the hollow elements a convenient shape for the purposes of heat exchange, production of the heat exchanger is simplified, and the heat-exchange surface can be maximized.

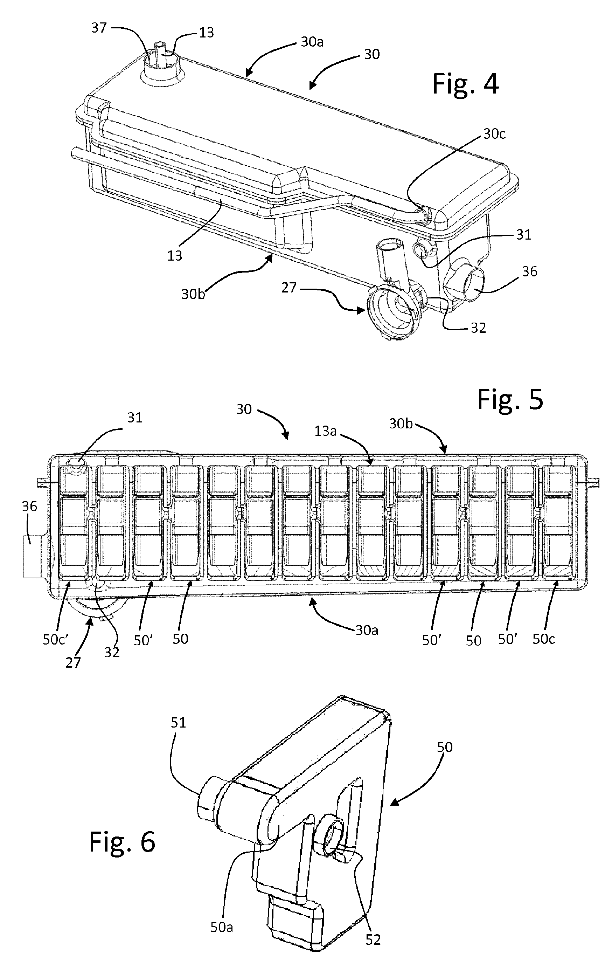

Figure 4 illustrates a possible embodiment of a heat exchanger according to the invention, i.e., of the water-storage container 30, with the corresponding heat-exchange portion 13a (not visible) of the first supply duct 13 inside it.

The container 30 has a longitudinally extended body, consisting of at least two parts made of plastic material. In the example, the body of the container 30 consists of a lower part 30a, which prevalently houses the portion of duct 13a, and an upper closing part 30b, which are mutually coupled in a fluid-tight way at respective flanged parts, for example thermally welded or fixed to one another with threaded means and interposition of suitable sealing means.

The body of the container 30 has, preferably in a side wall thereof, the respective inlet 31 and outlet 32 for the water. Preferentially, the inlet 31 is located in a generally upper region of the container 30, whereas the outlet 32 - to which the pump 27 is associated - is located in a lower region of the container itself. From Figure 5 it may be noted how, in a preferred embodiment, the bottom wall of the container 30, i.e., of its lower part 30a, is at least slightly inclined so as to favour off-flow of the water towards the outlet 32. Moreover visible in Figure 4 are the inlet 36 and the outlet 37 for the drying air.

Defined in the body of the container 30, for example in its upper part, are passages for enabling connection, upstream and downstream of the container 30, of the heat-exchange portion 13a to the supply duct 13. One of said passages, at which suitable sealing means are preferentially operative, is designated by 30c in Figure 4, for the branch of the duct 13 that is located upstream of the portion 13a. In the example represented, the passage for the branch of the duct 13 that is located downstream of the portion 13a is represented by the outlet 37 for the drying air: there is nothing, on the other hand, to rule out purposely providing a passage similar to the one designated by 30c.

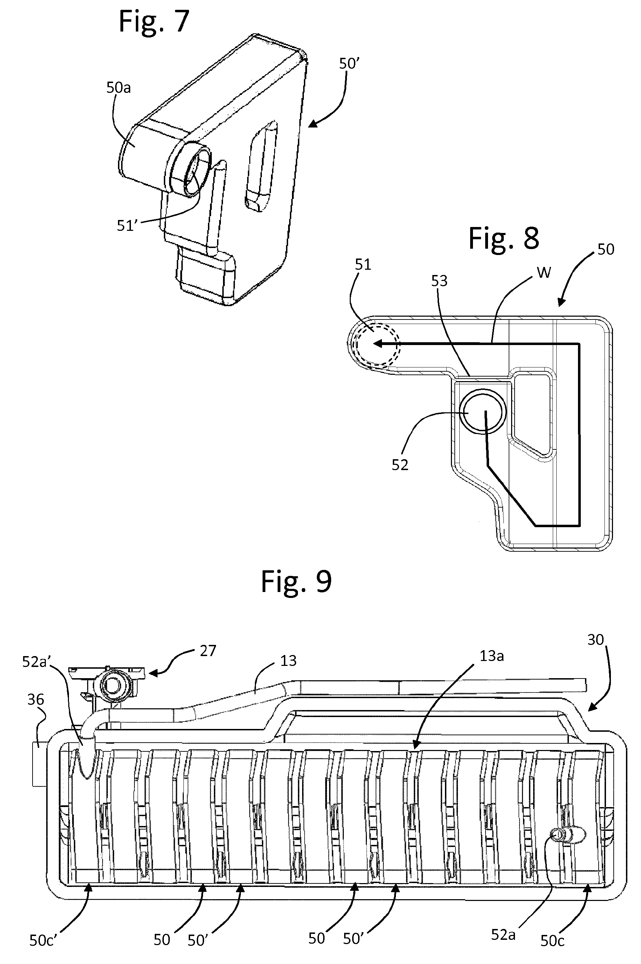

Figure 6 shows one of the hollow modular elements used for providing, in one embodiment of the invention, the heat-exchange portion 13a of the supply duct 13. The element represented, designated as a whole by 50, is of a first type, with a hollow body made of plastic material. In the example, the body of the element 50 has a generally annular shape with a projecting upper portion 50a. In said upper portion 50a, defined at a side face or end face of the body, here the left-hand face, is a first connection 51; a second connection 52 is defined in an intermediate area of the opposite side face, here the right-hand face, preferably just slightly beneath the connection 51. Figure 7 illustrates, instead, a hollow modular element of a second type, designated by 50'. In general terms, the structure of the element 50' is similar to that of the element 50, but with a symmetrical or reversed arrangement of the corresponding connections: basically, then, the upper connection, designated here by 51' is located on the right-hand face of the body of the element 50', whereas the second connection, not visible but designated hereinafter by 52', is now located on the left-hand face (not visible).

Defined within the cavity of the elements 50, 50' is at least one intermediate closing wall, visible in Figure 8 for an element 50, where it is designated by 53. Said wall 53 basically extends in the annular part of the body of the hollow element, above the intermediate connection 52 or 52'. In any case, the wall 53 is defined in such a way that the water passing within the hollow body cannot pass directly between the two connections following the shortest path, but will, instead, necessarily have to follow the longer path, i.e., prevalently the aforesaid annular part, as indicated by way example by the arrow W of Figure 8 for an element 50 (in the case of an element 50', the path of the water will be reversed with respect to an element 50, i.e., from the connection 51' to the connection 52').

Preferentially, the diameter of the connection 51 is slightly larger than the diameter of the connection 51', or vice versa, in such a way that they may possibly be fitted in a fluid-tight way in one another, with possible interposition of a gasket or of a sealant applied, for example, silicone. For the same reasons, preferentially the diameter of the connection 52 is slightly larger than the diameter of the connection 52', or vice versa.

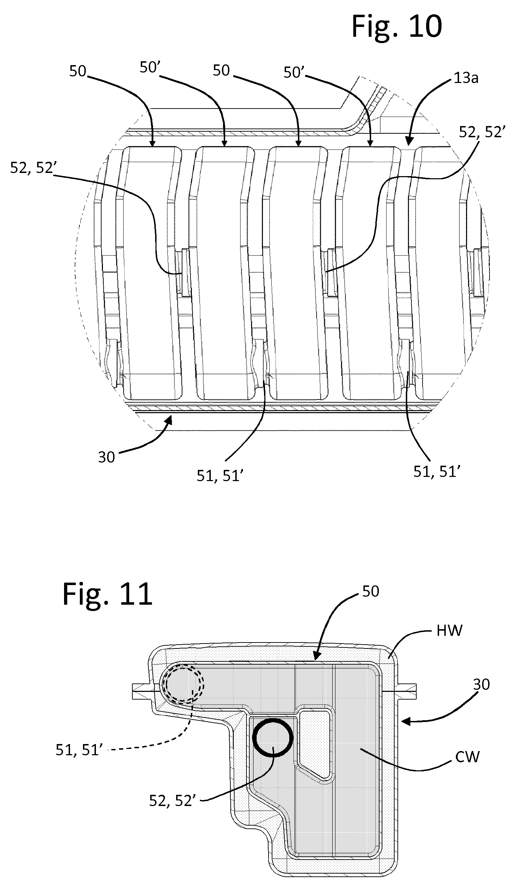

In this way, as may be appreciated, a plurality of elements 50 and 50' may be assembled together in an alternating way, to provide the heat-exchange portion 13a of the supply duct 13, as exemplified in Figures 5 and 9. Connection of the elements is in series and is obtained by fitting the outlet of one element to the inlet of the next element. Such a mode of connection is clearly visible in Figure 10: visible in this partial, schematic, cross-sectional view is the coupling of the connection 52', which here function as outlets of the elements 50', to the connections 52, which here function as inlets of the elements 50, as well as the coupling of the connections 51', which here function as inlets of the elements 50', to the connections 51, which here function as outlets of the elements 50.

In the example represented, provided at the two ends of the heat-exchange portion 13a are hollow modular elements 50c and 50c' having a shape modified with respect to the elements 50 and 50'. The hollow element designated by 50c is largely similar to the elements 50, but is without the connection 52, which is replaced by a connection 52a that is located in the upper part of the element itself. Likewise, the hollow element designated by 50c' is largely similar to the elements 50', but is without the connection 52', which is replaced by a connection 52a that is located in the upper part of the element itself. The use of hollow elements 50c and/or 50c' is preferred in the case where it is desired to have the inlet and the outlet of the portion 13a in the upper area of the container 30 and/or to obtain maximization of the useful dimensions of the portion 13 itself within the container 30. On the other hand, there is nothing to rule out using, at the two opposite ends of the heat-exchange portion 13a, two hollow elements 50 and 51', in which case the passages for connection of the portion 13a to the stretches of the duct 13, upstream and downstream, will be provided in the two opposite end walls of the container 30 (for the stretch upstream, the inlet 36 for the drying air may also be exploited).

As may be appreciated, with the arrangement illustrated, the water coming from the mains supply R penetrates into the element 50c' through its connector 52a, filling it, and then passes into the next element 50, in turn filling it, and so on up to the last element of the series, here represented by the element 50c, with its connection 52a that functions as outlet of the portion 13a. Thanks to the presence of the wall 53 of the hollow elements 50, 50', 50a, 50a, the connection of the latter in series practically simulates a coiled duct, with sequential filling of the elements themselves.

Figure 11 exemplifies, via a cross-sectional view in side elevation, the condition that arises when the heat-exchange portion 13a and the container 30 are both full of water. Basically, the tortuous portion 13a formed by the hollow elements - initially containing non-heated water CW - is practically completely immersed in the heated water HW present in the container 30. In the course of execution of the second operating step of the treatment program (i.e., the step performed with water charged into the washtub via the second supply duct 33) heat exchange occurs between the two fluids HW and CW, with the former that yields heat to the latter. It will be appreciated that, in the particularly advantageous embodiment illustrated in Figures 4-11, the surface of heat exchange is very large, in particular by virtue of the fact that also the larger faces of the hollow elements 50, 50', 50a, 50a are set apart from one another. Indicatively, as compared to a known dish-washing machine of the type having a water-storage container set up against a side wall of the washtub, the preferential solution proposed for the invention makes possible an increase of the breadth of the heat-exchange surface by between three and four times.

As has been said previously, the heat exchanger constituted by the container 30 and by the heat-exchange portion 13a may be exploited also for execution of a drying step, and in this case the container 30 has an inlet 36 and an outlet 37 for the air. When the heated water is delivered to the container 30, at the end of the first operating step of the program, there are no risks of the water overflowing through said inlet and outlet. If for any reason (for example, malfunctioning) a volume of water exceeding its useful capacity is delivered to the container 30, the water in excess can flow back freely into the washtub, through the outlet 37 and the chimney 38. On the other hand, also under normal conditions, part of the heated water delivered to the container 30 may converge into the air inlet 36, and possibly climb up along the drying circuit (especially along the hollow body 10, in the example shown): it is in any case clear that, upon discharge of the container 30, also this water present in the drying circuit will be emptied out.

Previously, the invention has been described with reference to the application of the heat exchanger 13a, 30 to a dish-washing machine, but it will be appreciated that the same may be used to advantage on other washing and/or drying machines for domestic use. For example, the heat exchanger and the ideas exemplified above in relation to recovery of part of the heat of a liquid used in a step of a treatment cycle may be used to advantage also on laundry-washing machines, in the case where the need arises. The same may be said in relation to exploitation of the heat exchanger also as active component of a drying system, and in this perspective the heat exchanger may be used, for example, on machines for washing and drying laundry. Of course, for such applications the shapes, dimensions, and thicknesses of the components of the heat exchanger may differ from those exemplified in relation to its use on a dish washer.

A heat exchanger of the type provided according to the invention may be used to advantage also on laundry dryers as active part of a drying system, and especially in order to obtain condensation of the humidity present in the drying air set in circulation by a fan. For such an application, the first heat-exchange fluid will be represented, precisely, by the drying air, whereas the second heat-exchange fluid may be a coolant of a heat pump or other refrigerating system of the laundry dryer. This application proves particularly advantageous, since the heat exchanger essentially made of plastic provided according to the invention enables replacement of traditional heat exchangers having metal coils, which present a higher cost and a greater weight. Obviously, also for this type of application, the shapes, dimensions, and thicknesses of the components of the heat exchanger may differ from those exemplified in relation to its use on a dish washer. Of course, the use of the heat exchanger described as part of a heat-pump system can also be applied to dish washer machines that envisage such a system for execution of steps of drying of the dishes.

It is clear that numerous variations are possible for the person skilled in the branch to the dish-washing machine described by way of example, without thereby departing from the scope of the invention as defined in the annexed claims.

In a particularly advantageous variant, at least one of the water-storage container 30 and the heat-exchange portion 13a of the first supply duct may be at least partially integrated in a base of the machine, or else may be at least in part made of a single piece therewith.

## Claims

1. A household washing and/or drying machine, such as a dishwasher, a laundry-washing machine, a laundry washer-dryer, or a laundry dryer, including a heat exchanger (13a, 30), which comprises a longitudinally extended casing (30a), having a respective hollow body made of plastic material with a first inlet (31) and a first outlet (32) for a first heat-exchange fluid, there extending within the casing (30) a generally tortuous duct (13a) for a second heat-exchange fluid, the duct (13a) having a respective body made of plastic material, **characterised in that** the body of said duct (13a) comprises a plurality of hollow modular elements (50, 50'; 50c, 50c') made of plastic material, coupled to one another in a fluid-tight way and in fluid communication, each modular element having an inlet connection (52, 51') and an outlet connection (51, 52') for the second heat-exchange fluid.

2. The machine according to Claim 1, wherein said casing (30) further comprises a second inlet (36) and a second outlet (37) for a third heat-exchange fluid, the third heat-exchange fluid being feedable into the casing (30) when the first heat-exchange fluid is not fed therein, and vice versa.

3. The machine according to Claim 1, wherein said connections are prearranged in such a way that the inlet connection (52, 51') of one modular element can be coupled to the outlet connector (51, 52') of another modular element.

4. The machine according to Claim 1, wherein the modular elements (50, 50', 50c, 50c') comprise at least modular elements of a first type (50) and modular elements of a second type (50'), which are in particular different in shape and/or arrangement of the respective connectors.

5. The machine according to Claim 4, wherein the modular elements of a first type (50) have a symmetric or reversed arrangement of the respective inlet and outlet connections (51, 52) with respect to the inlet and outlet connections (51', 52') of the modular elements of a second type (50').

6. The machine according to any one of the preceding claims, wherein the heat exchanger is part of a heat-pump system, one of the heat-exchange fluids being a coolant of said system.

7. The machine according to any one of the preceding claims, wherein the modular elements (50, 50', 50c, 50c') define a respective cavity having at least in part a generally annular shape.

8. The machine according to Claim 7, wherein the modular elements (50, 50', 50c, 50c') have an internal wall (53), in an intermediate position between the inlet connection (52, 51') and the outlet connection (51, 52'), said wall (53) being arranged for preventing the second heat-exchange fluid from flowing between said connections following the shortest path in said cavity.

9. The machine according to Claim 4 or 5, wherein the modular elements (50, 50', 50c, 50c') comprise at least one modular element of a third type (50c, 50c') at an end region of said duct (13a).

10. The machine according to Claim 9, wherein the modular element of a third type (50c, 50c') has one respective said connection (52a, 52a) at an upper face thereof.

## Patentansprüche

1. Haushalts-Wasch- oder Trocknermaschine, wie beispielsweise eine Geschirrspülmaschine, eine Wäsche-Waschmaschine, ein Wäsche-Waschtrockner oder ein Wäschetrockner, umfassend einen Wärmetauscher (13a, 30), welcher ein sich longitudinal erstreckendes Gehäuse (30a) umfasst, welches einen entsprechenden, aus Kunststoffmaterial hergestellten, hohlen Körper mit einem ersten Einlass (31) und einem ersten Auslass (32) für ein erstes Wärmetausch-Fluid aufweist, wobei sich innerhalb des Gehäuses (30) eine im Wesentlichen gewundene Leitung (13a) für ein zweites Wärmetausch-Fluid erstreckt, wobei die Leitung (13a) einen entsprechenden aus Kunststoffmaterial hergestellten Körper aufweist, **dadurch gekennzeichnet, dass** der Körper der Leitung (13a) eine Mehrzahl von aus Kunststoffmaterial hergestellten hohlen modularen Elementen (50, 50'; 50c, 50c') umfasst, welche miteinander in einer fluiddichten Weise und in Fluidverbindung gekoppelt sind, wobei jedes modulare Element eine Einlassverbindung (52, 51') und eine Auslassverbindung (51, 52') für das zweite Wärmetausch-Fluid aufweist.

2. Maschine nach Anspruch 1, wobei das Gehäuse (30) ferner einen zweiten Einlass (36) und einen zweiten Auslass (37) für ein drittes Wärmetausch-Fluid umfasst, wobei das dritte Wärmetausch-Fluid in das Gehäuse (30) zuführbar ist, wenn das erste Wärmetausch-Fluid nicht da hinein zugeführt wird, und umgekehrt.

3. Maschine nach Anspruch 1, wobei die Verbindungen derart voreingerichtet sind, dass die Einlassverbindung (52, 51') von einem modularen Element mit dem Auslass-Verbindungselement (51, 52') von einem weiteren modularen Element gekoppelt werden kann.

4. Maschine nach Anspruch 1, wobei die modularen Elemente (50, 50', 50c, 50c') wenigstens modulare Elemente eines ersten Typs (50) und modulare Elemente eines zweiten Typs (50') umfassen, welche insbesondere in ihrer Form oder/und Anordnung der jeweiligen Verbindungselemente verschieden sind.

5. Maschine nach Anspruch 4, wobei die modularen Elemente eines ersten Typs (50) eine symmetrische oder entgegengesetzte Anordnung der jeweiligen Einlass- und Auslassverbindungen (51, 52) bezüglich den Einlass- und Auslassverbindungen (51', 52') der modularen Elemente eines zweiten Typs (50') aufweisen.

6. Maschine nach einem der vorhergehenden Ansprüche, wobei der Wärmetauscher ein Teil eines Wärmepumpen-Systems ist, wobei eines der Wärmetausch-Fluide ein Kühlmittel des Systems ist.

7. Maschine nach einem der vorhergehenden Ansprüche, wobei die modularen Elemente (50, 50', 50c, 50c') einen jeweiligen Hohlraum definieren, welcher wenigstens teilweise eine im Wesentlichen ringförmige Form aufweist.

8. Maschine nach Anspruch 7, wobei die modularen Elemente (50, 50', 50c, 50c') eine innere Wand (53) in einer Zwischenposition zwischen der Einlassverbindung (52, 51') und der Auslassverbindung (51, 52') aufweisen, wobei die Wand (53) dazu eingerichtet ist, zu verhindern, dass das zweite Wärmetausch-Fluid zwischen den Verbindungen dem kürzesten Weg in dem Hohlraum folgend strömt.

9. Maschine nach Anspruch 4 oder 5, wobei die modularen Elemente (50, 50', 50c, 50c') wenigstens ein modulares Element eines dritten Typs (50c, 50c') an einem Endbereich der Leitung (13a) umfassen.

10. Maschine nach Anspruch 9, wobei das modulare Element eines dritten Typs (50c, 50c') eine entsprechende derartige Verbindung (52a, 52a) an einer oberen Fläche davon aufweist.

## Revendications

1. Machine domestique à laver et/ou à sécher, telle qu'un lave-vaisselle, une machine à laver le linge, une machine à laver et à sécher le linge, ou un sèche-linge, comportant un élément d'échange de chaleur (13a, 30), lequel comprend un boîtier s'étendant de façon longitudinale (30a), présentant un corps creux respectif constitué d'un matériau plastique, doté d'un premier orifice d'entrée (31) et d'un premier orifice de sortie (32) destinés à un premier fluide d'échange de chaleur, et, s'étendant, à l'intérieur du boîtier (30), un conduit généralement sinueux (13a) destiné à un deuxième fluide d'échange de chaleur , le conduit (13a) présentant un corps respectif constitué d'un matériau plastique, **caractérisée en ce que** le corps dudit conduit (13a) comprend une pluralité d'éléments modulaires creux (50, 50' ; 50c, 50c') constitués de matériau plastique couplés les uns aux autres d'une manière étanche au fluide et en communication de fluide, chaque élément modulaire présentant un raccordement d'entrée (52, 51') et un raccordement de sortie (51, 52') destiné au deuxième fluide d'échange de chaleur.

2. Machine selon la revendication 1, dans laquelle ledit boîtier (30) comprend, de plus, un deuxième orifice d'entrée (36) et un deuxième orifice de sortie (37) destinés à un troisième fluide d'échange de chaleur, le troisième fluide d'échange de chaleur pouvant être fourni dans le boîtier (30) lorsque le premier fluide d'échange de chaleur n'y est pas fourni pas, et vice versa.

3. Machine selon la revendication 1, dans laquelle lesdits raccordements sont pré-agencés de telle manière que le raccordement d'entrée (52, 51') d'un premier élément modulaire peut être couplé au raccordement de sortie (51, 52') d'un autre élément modulaire.

4. Machine selon la revendication 1, dans laquelle les éléments modulaires (50, 50', 50c, 50c') comportent au moins des éléments modulaires d'un premier type (50) et des éléments modulaires d'un second type (50'), lesquels sont, en particulier, différents en forme et/ou en agencement des éléments de raccordement respectifs.

5. Machine selon la revendication 4, dans laquelle les éléments modulaires d'un premier type (50) présentent un agencement symétrique ou inversé des raccordements respectifs d'entrée et de sortie (51, 52) par rapport aux raccordements d'entrée et de sortie (51', 52') des éléments modulaires d'un second type (50').

6. Machine selon l'une quelconque des revendications précédentes, dans laquelle l'échangeur de chaleur fait partie d'un système de pompe à chaleur, l'un des fluides d'échange de chaleur étant un agent de refroidissement dudit système.

7. Machine selon l'une quelconque des revendications précédentes, dans laquelle les éléments modulaires (50, 50', 50c, 50c') définissent une cavité respective présentant, au moins en partie, une configuration généralement annulaire.

8. Machine selon la revendication 7, dans laquelle les éléments modulaires (50, 50', 50c, 50c') présentent une paroi interne (53), dans une position intermédiaire entre le raccordement d'entrée (52, 51') et le raccordement de sortie (51, 52'), ladite paroi (53) étant conçue pour empêcher le deuxième fluide d'échange de chaleur de s'écouler entre lesdits raccordements en suivant le trajet le plus court dans ladite cavité.

9. Machine selon la revendication 4 ou 5, dans laquelle les éléments modulaires (50, 50', 50c, 50c') présentent au moins un élément modulaire d'un troisième type (50c, 50c') au niveau d'une zone d'extrémité dudit conduit (13a) .

10. Machine selon la revendication 9, dans laquelle l'élément modulaire d'un troisième type (50c, 50c') présente un dit élément de raccordement respectif (52a, 52a) au niveau d'une face supérieure.
